# EUROPÄISCHE PATENTSCHRIFT

(11) **EP 2 113 685 B1**
(45) Veröffentlichungstag und Bekanntmachung des Hinweises auf die Patenterteilung: **21.03.2012**
(21) Anmeldenummer: 09005867.8
(22) Anmeldetag: 28.04.2009
(51) Int. Cl.: F16H 29/16

(54) **Getriebe mit stufenlose verstellbarer Übersetzung**
Gearbox with continuously variable translation
Boîte de vitesse dotée d'un braquet variable en continu

(30) Priorität: 28.04.2008 DE 102008021280
(43) Veröffentlichungstag der Anmeldung: 04.11.2009
(73) Patentinhaber: Weitzel, Michael, 67437 Lindenberg (DE)
(72) Erfinder: Weitzel, Michael, 67437 Lindenberg (DE)
(74) Vertreter: Hocker, Thomas

(56) Entgegenhaltungen:
- FR-A- 778 778
- GB-A- 1 071 716

## Beschreibung

Die Erfindung bezieht sich auf ein stufenloses Getriebe zum Erzeugen variabler Übersetzungen von Drehzahlen oder Drehmomenten und ein Verfahren zum Betreiben dieses Getriebes.

Aus dem Stand der Technik sind verschiedene Übersetzungsgetriebe bekannt. Hierzu gehören Zahnradgetriebe, Umlauf- und Zugmittel, - sowie Reibradgetriebe.

Nachteilig beim Stand der Technik ist anzusehen, dass bei Zahnradgetrieben nur eine Übersetzung mittels Stufensprung einzelner Zahnradpaarungen erreicht werden kann. Alle Übersetzungen sind durch die Radpaarungen vorgegeben. Durch die endliche Anzahl der Radpaarungen ist auch die Möglichkeit der Zwischenstufungen begrenzt.

Die Umlaufgetriebe sind Übersetzungsgetriebe bei denen fallweise Drehzahl und Drehmoment voneinander unabhängig und variabel gewählt werden können (hydrodynamische Umlaufgetriebe). Der Nachteil ist im hydraulischen Schlupf zu sehen.

Die Zugmittelgetriebe sind wegen der begrenzten Lastaufnahme der Riemen oder Ketten nur bedingt einsetzbar. Der zur variablen Übersetzung benötigte hohe Kraftschluß überschreitet bei den Zugmitteln (Flach-, Keil- oder Keilrippenriemen) schon bei relativ geringen Zugmomenten die Lastgrenze.

Bei Reibradgetrieben rollt ein Rad auf einem kegelförmigen Körper ab, so dass eine stufenlose Verstellung des Übersetzungsverhältnisses möglich ist. Aufgrund des Schlupfes der Reibräder sind derartige Getriebe nur für kleinere Drehmomente geeignet. Wird die Druckspannung der Räder erhöht, so sinkt der Wirkungsgrad durch die erhöhte Walkarbeit der Reibräder, ferner besteht die Gefahr der Zerstörung der Gummiteile.

Die FR 778 778 zeigt ein Getriebe mit mehreren Schubstangen, welche die Rotationsbewegung einer äußeren Scheibe auf eine innen liegende, deaxiale Scheibe übertragen. Die Schubstangen sind jeweils mittels eines Gelenks an der äußeren Scheibe drehbar befestigt. Am anderen Ende der Schubstangen befinden sich Zahnräder mit einseitig wirkenden Freiläufen. Die Zahnräder sind im Eingriff mit der innen liegenden Scheibe. Eine Rotation der äußeren Scheibe führt dazu, dass das jeweils sperrende Zahnrad die innere Scheibe antreibt, während die anderen Zahnräder aufgrund der Freiläufe keine Kraft übertragen. Wird das antreibende Zahnrad bezüglich seiner Geschwindigkeit von einem anderen Zahnrad überholt, so übernimmt letztgenanntes die Kraftübertragung. Mittels einer Kardanwelle wird die Rotation der innen liegenden Scheibe auf die Abtriebswelle übertragen, so dass Antriebs- und Abtriebswelle des Getriebes auf einer Linie liegen. Durch die Kardanwelle verschlechtert sich insbesondere bei großen Drehachsabständen der inneren und der äußeren Scheibe der Wirkungsgrad des Getriebes.

GB 1071716 zeigt ein stufenlos verstellbares Getriebe, welches unter den Wortlaut des Oberbegriffs des Anspruchs 1 fällt und bei dem ein Exzenterrad über eine Verstelleinrichtung mittels Schnecke und Kegelraddifferential mit einer Kreisscheibe verdrehbar verbunden ist. Auch ein derartiges Getriebe ist verlustbehaftet.

Der Erfindung liegt die Aufgabe zugrunde, eine Vorrichtung und ein Verfahren zum Betreiben derselben zu schaffen, welche die Nachteile des Standes der Technik vermeidet. Insbesondere ist die Aufgabe der Vorrichtung, alle Übersetzungsverhältnisse eines Wellensystems (Getriebe) zwischen einer Maximal- und Minimalübersetzung ohne Schlupf zu ermöglichen. Das Ziel ist ein stufen- und schlupfloses Übersetzungssystem (Getriebe) zu beschreiben, das nicht durch hydraulischen Schlupf oder Stützmomente bei bestimmten Drehzahlen einem schlechten Wirkungsgrad unterliegt.

Erfindungsgemäß wird dies gemäß den Merkmalen des unabhängigen Anspruchs 1 dadurch gelöst, dass bei einem Getriebe um die Eingangswelle eine erste Kreisscheibe exzentrisch angeordnet ist. Um diese erste Kreisscheibe ist wiederum exzentrisch ein Exzenterrad stufenlos verdrehbar angeordnet. Eine Vielzahl von Armen überträgt mittels Zahnräder das Antriebsmoment auf eine Ausgangswelle. Die Zahnräder verfügen in einer Drehrichtung über einen Freilauf, während sie in der anderen Drehrichtung sperren. Durch die Taumelbewegung des Exzenterrades um die Eingangswelle werden die Arme unterschiedlich schnell bewegt. Das Zahnrad des am schnellsten bewegten Armes sperrt und treibt die Ausgangswelle an. Die anderen Zahnräder drehen sich im Freilauf ohne Kraftübertragung. Sobald ein anderer Arm schneller bewegt wird, übernimmt dessen Zahnrad die Kraftübertragung. Durch die stufenlose Verdrehung des Exzenterrades wird erreicht, dass die Arme sich unterschiedlich mehr oder minder schnell bewegen und somit mit erhöhter Exzentrität des Exzenterrades die Rotationsgeschwindigkeit der Ausgangswelle zunimmt. Es ist besonders vorteilhaft, wenn die Verstellung hydraulisch erfolgt, wobei zwischen der Kreisscheibe und dem Exzenterrad ein kreissegmentförmiger Kanal angeordnet ist, in dem ein Trennkolben, der mit der Kreisscheibe oder dem Exzenterrad verbunden ist, den Kanal in zwei voneinander abgetrennte Kammern unterteilt. Werden die beiden Kammern über Hydraulikleitungen mit unterschiedlichen Drücken hydraulisch beaufschlagt, so bewirkt dies ein Verdrehen des Exzenterrades.

Vorteilhafte Ausgestaltungen ergeben sich durch die Merkmale der abhängigen Ansprüche.

Gemäß Anspruch 2 bilden eine Vielzahl von Armen ein Schubarm- oder Scherensysteme, welche jeweils aus mindestens einem Paar drehbar miteinander verbundenen Armen bestehen, welche vorzugsweise V- oder W-förmig angeordnet sind. Die Schubarmsysteme sind von einer Seite fest mit dem Abtriebssystem verbunden und werden in Rotationsintervallen niedergedrückt. Das abzustützende Reaktionsmoment wird an einer separaten Einheit fallweise verzögert (allmähliches Anfahren aus dem Stillstand) oder blockiert (arbeiten in variabler Übersetzung). Ein Arm eines Schubarm- oder Scherensystems ist dabei drehbar mit einer Reaktionsscheibe verbunden, wobei das andere Ende dieses Arms sowohl mit einem anderen Arm, als auch mit einer drehbaren Rolle verbunden ist. Die Rolle läuft auf einer Innenkontur des Exzenterrad. Der letzte Arm dieses Schubarm- oder Scherensystems ist mit einem Zahnrad verbunden, wobei dieses Zahnrad in den Zahnkranz einer Zahnradscheibe, welche form- und kraftschlüssig mit der Ausgangswelle verbunden ist, eingreift. Die V- oder W-förmig angeordneten Arme der Schubarm- oder Scherensysteme bewirken im Vergleich zu einfachen Armen deutlich höhere mögliche Differenzen bezüglich der Geschwindigkeit des jeweils schnellsten Arms und somit bezüglich der Abtriebsdrehzahl. Es können auch an Stelle eines Schubarmsystems auch Scherensysteme (V-System) mit zwei Schenkeln sowie Systeme zum Einsatz gebracht werden, die mehrere Scheren miteinander verknüpfen, aber jeweils nur eine Verbindung zum Abtriebsystem und eine zur Reaktionseinheit beinhalten (W- oder Mehrfachsystem).

Gemäß der Merkmale des abhängigen Anspruchs 3 verfügt das Getriebe über eine Bremse, mittels derer die Kraftübertragung erst ermöglicht wird. Bei geöffneter Bremse wird kein Moment im Getriebe von der Eingangswelle auf die Ausgangswelle übertragen.

Die Merkmale des abhängigen Anspruchs 4 sehen vor, dass die Reaktionsscheibe auf der Ausgangswelle gelagert ist.

Gemäß den Merkmalen des abhängigen Anspruchs 5 sind zwischen den paarweisen Armen Dreh- oder Schenkelfedern angeordnet, welche ein Zusammenziehen der Arme und Vorspannung der Rolle auf die Innenkontur des Exzenterrades bewirken.

Die Merkmale des abhängigen Anspruchs 6 beschreiben einen Massenausgleich.

Die Verfahrensansprüche 7 und 8 schützen ein Verfahren zum Betreiben des erfindungsgemäßen Getriebes. Anspruch 7 beschreibt, wie das Übersetzungsverhältnis verändert wird. Anspruch 8 beschreibt die Kupplungsfunktion des Getriebes.

Die Erfindung wird nun anhand der Figuren detailliert erläutert. Hierbei zeigen:
Figur 1 das erfindungsgemäße Getriebe in der Seitenansicht von der Eingangs- zur Ausgangswelle,
Figur 2 einen Schnitt der ersten Figur,
Figur 3 die Verstelleinrichtung des Getriebes,
Figur 4 die Verstelleinrichtung in einer Endposition,
Figur 5 die Verstelleinrichtung in einer Zwischenposition inklusive Kraftfluss,
Figur 6 eine Seitenansicht mit einer Variante des Scherensystems und Massenausgleich,
Figur 7 die Eingangswelle mit den beiden Kreisscheiben für das Exzenterrad und den Massenausgleich,
Figur 8 ein detaillierter Schnitt in die Seitenansicht,
Figur 9 das Scherensystem im Detail,
Figur 10 die Kraftübertragung mittels der Scherensysteme,
Figur 11 die Rotation der Verstelleinrichtung bei stehender Eingangswelle,
Figur 12 die Verstelleinrichtung bei Rotation der Eingangswelle,
Figur 13 eine vereinfachte Darstellungen der Verstelleinrichtung und
Figur 14 dieselbe Darstellung aus einer anderen Perspektive.

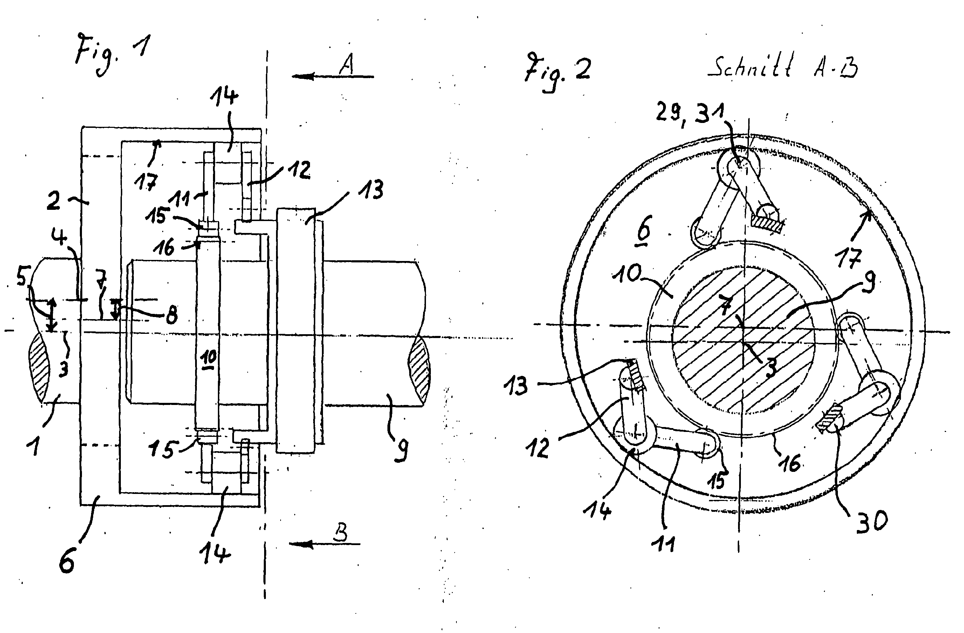

Figur 1 zeigt das erfindungsgemäße Getriebe mit einer Eingangswelle 1, welche mit einer ersten Kreisscheibe 2 form- und kraftschlüssig verbunden ist. Die Mittellinie 3 der Eingangswelle 1 und die Mittellinie 4 der Kreisscheibe 2 verlaufen parallel mit Versatz 5. Ein Exzenterrad 6 ist wiederum um die erste Kreisscheibe 2 herum drehbar angeordnet. Die Mittellinie 7 des Exzenterrad 6 und die Mittellinie 4 der ersten Kreisscheibe 2 verlaufen ebenfalls parallel mit Versatz 8. Eine Ausgangswelle 9 verläuft koaxial zur Eingangswelle 1. Eine Reaktionsscheibe 13 ist gleitend auf der Ausgangswelle 9 gelagert. Eine Vielzahl von Armen 11, 12, Rollen 14 und Zahnrädern 15 schafft eine Verbindung zwischen dem Exzenterrad 6 und dem Zahnkranz 16 einer mit der Ausgangswelle 9 form- und kraftschlüssig verbundenen Zahnradscheibe 10.

Figur 2 zeigt einen Schnitt aus Figur 1. Es wird deutlich, dass die Arme 11, 12 V-förmige angeordnet sind. Je ein Arm 11 eines Schubarm- oder Scherensystems ist mittels eines Lagers 30 drehbar mit der Reaktionsscheibe 13 verbunden, wobei das andere Ende dieses Arms 11 sowohl mit einem anderen Arm 12, als auch mit einer drehbaren Rolle 14 verbunden ist. Die Rolle 14 läuft auf einer Innenkontur 17 des Exzenterrad 6. Der zweite Arm 12 dieses Schubarm- oder Scherensystems ist mit einem Zahnrad 15 verbunden. Die Zahnräder 15 sperren in eine Drehrichtung und verfügen in der anderen Drehrichtung über einen Freilauf. Die Zahnräder 15 greifen in den Zahnkranz 16 der Zahnradscheibe 10. Eine Feder 29 bewirkt ein Zusammenziehen der Arme 11, 12 und Vorspannung der Rolle 14 auf die Innenkontur 17 des Exzenterrades 6.

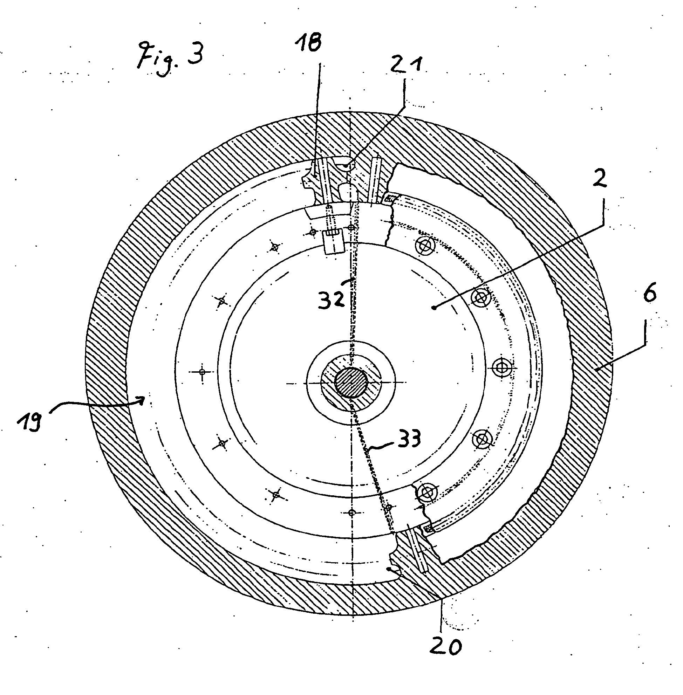

Figur 3 zeigt detailliert die Kreisscheibe 2 mit dem darum angeordneten Exzenterrad 6 im Schnitt. Zwischen der Kreisscheibe 2 und dem Exzenterrad 6 ist im Exzenterrad 6 ein kreissegmentförmiger Kanal 19 angeordnet. Die Kreisscheibe 2 ist mit einem Trennkolben 18 verbunden, welcher den Kanal 19 in zwei voneinander abgetrennte Kammern 20, 21 unterteilt. Der Trennkolben 18 hat an jeder Seite einen Anschlag. An der Fußseite des Trennkolbens 18 sind nicht dargestellte Lamellendichtungen eingelassen, die bei hydraulischer Beaufschlagung öldicht an der Wandung abdichten, aber ein Verdrehen der Einzelkomponenten zulassen. Zwei Hydraulikleitungen 32, 33 sind mit den beiden Kammern 20, 21 verbunden, so dass durch hydraulische Beaufschlagung mit unterschiedlichen Drücken eine der beiden Kammern 20, 21 innerhalb des Kanals 19 vergrößert werden kann, während der andere dadurch verkleinert wird. Die beiden Hydraulikleitungen 32, 33 führen über die Eingangswelle 1 zu zwei nicht dargestellten Ringleitungen auf unterschiedlicher axialer Höhe, so dass sie unabhängig voneinander mit Hydraulikflüssigkeit beaufschlagt werden können.

Alternativ kann der kreissegmentförmige Kanal auch in der Kreisscheibe angeordnet sein; dann ist der Trennkolben mit dem Exzenterrad verbunden.

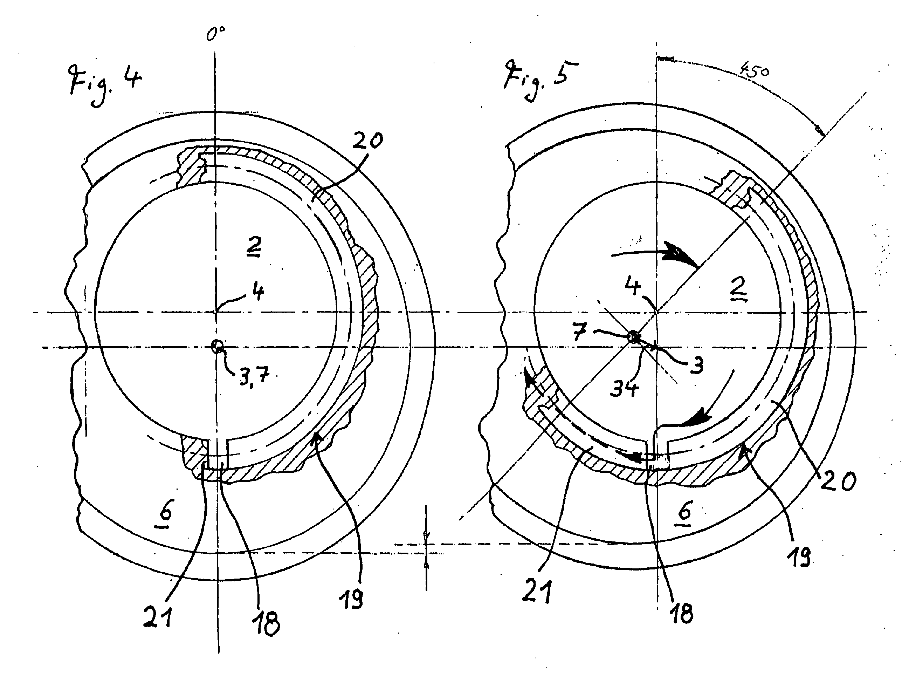

In Figur 4 ist der Fall dargestellt, dass die eine Kammer 21 minimal ist, während die andere Kammer 20 ihr maximales Volumen aufweist. Die Eingangswelle 1 und das Exzenterrad 6 laufen koaxial (die Mittellinien 3 und 7 überdecken sich). In diesem Fall laufen alle Zahnräder 15 (vergleiche Figur 2) gleich schnell und sind somit alle im Eingriff mit der Zahnradscheibe 10.

Figur 5 zeigt den Fall, dass im Vergleich zum Ausgangsfall (Figur 4) das Exzenterrad 6 zur ersten Kreisscheibe 2 um 45° verdreht ist. Die Eingangswelle 1 und das Exzenterrad 6 laufen nun zwar immer noch parallel, aber nicht mehr koaxial; das heißt, die Mittellinien 3 und 7 überdecken sich nicht mehr, sondern sind um eine Exzentrizität 34 beabstandet. Die Kraft wird von der ersten Kreisscheibe 2 über den Trennkolben 18 und die Hydraulikflüssigkeit in der Kammer 21 auf das Exzenterrad 6 übertragen (siehe Pfeile).

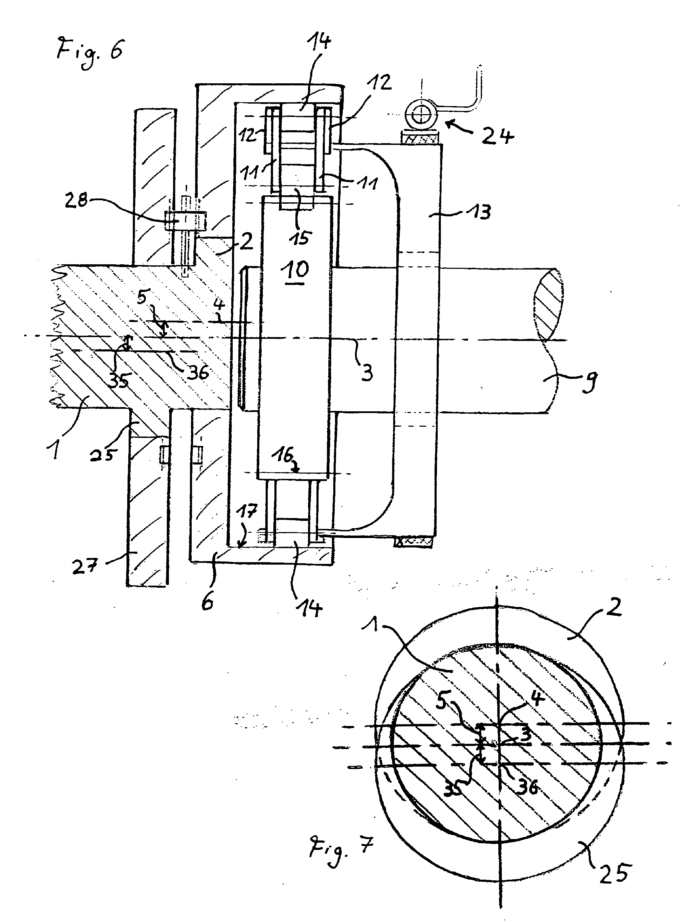

Figur 6 unterscheidet sich von Figur 1 vorwiegend dadurch, dass mit der Eingangswelle 1 über eine zweite Kreischeibe 25 eine Massenausgleichsscheibe 27 verbunden ist und das Schubarm- oder Scherensysteme über jeweils 2 parallel Arme 11, 12 verfügt. Die zweite Kreisscheibe 25 ist kraft- und formschlüssig mit der Eingangswelle 1 auf der der ersten Kreisscheibe 2 um 180° gegenüberliegenden Seite angeordnet, so dass die Mittellinie 3 der Einganswelle 1 und die Mittellinie 36 der zweiten Kreisscheibe 25 parallel mit Versatz 35 verlaufen (vergleiche Figur 7). Um die zweite Kreisscheibe 25 ist außermittig eine Massenausgleichsscheibe 27 drehbar angeordnet. Zwei Zahnräder 28, welche an der Eingangswelle 1 gelagert sind, sind mit dem Exzenterrad 6 und der Massenausgleichsscheibe 27 derart im Eingriff, dass eine Rotation des Exzenterrades 6 zu einer Rotation der Massenausgleichsscheibe 27 in entgegengesetzter Drehrichtung führt. Diese Bewegung führt bei entsprechend aufeinander abgestimmten Trägheitsmomenten zu einem Massenausgleich bei einer exzentrischen Bewegung.

Eine Bremse 24 ist mit der Reaktionsscheibe 13 verbunden. Sie ist anfangs geöffnet. Wird bei drehender Eingangswelle 1 die Bremse 24 geschlossen, so wird die Reaktionsscheibe 13 vorzugsweise zum Getriebegehäuse fest fixiert. Erst jetzt kann ein Drehmoment von der Primärseite des Getriebes auf die Sekundärseite übertragen werden. Die Bremse 24 kann beispielsweise als Trommelbremse, Außenbremse mit Bremsband oder Scheibenbremse ausgeführt sein.

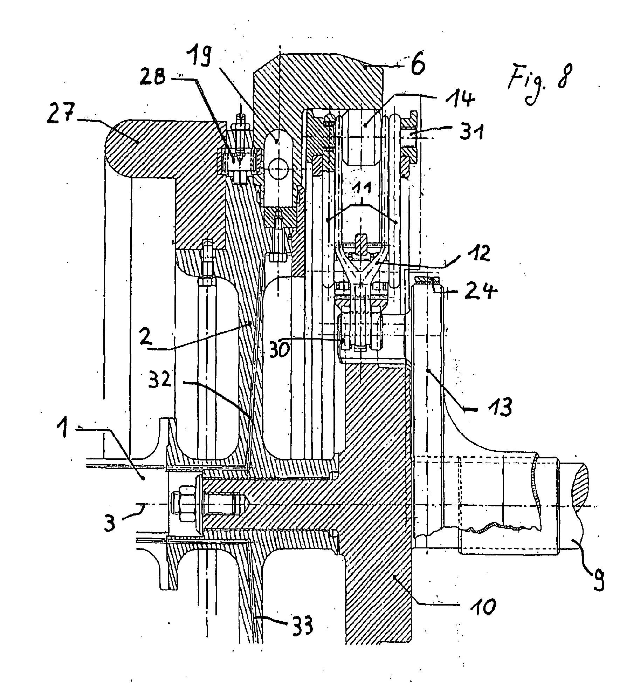

Figur 8 zeigt dies nochmals detailliert. Aus dieser Zeichnung gehen insbesondere das Lager 30 an der Reaktionsscheibe 13 und das Lager 31 an der Rolle 14 hervor. Die Eingangs- 1 und Ausgangswelle 9 sind gleitend miteinander verbunden; es besteht weder ein unmittelbarer Kraft-, noch Formschluss.

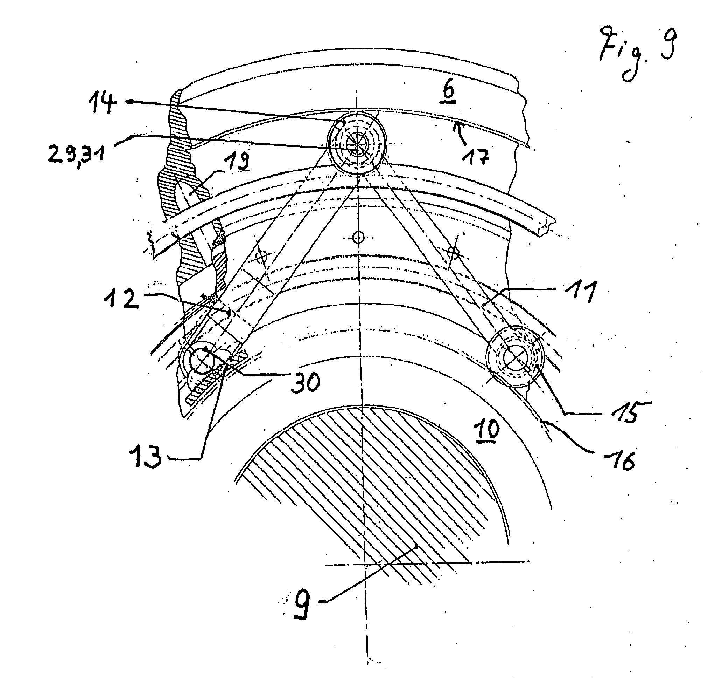

Figur 9 zeigt das Schubarm- oder Scherensystem. Der Arm 12 ist über das Lager 30 drehbar mit der Reaktionsscheibe 13 verbunden. Über das Lager 31 sind die Arme 11, 12 sowie die Rolle 14 miteinander verbunden. Die Rolle 14 ist in der Innenkontur 17 des Exzenterrades 6 geführt. Eine Feder 29 zieht die Arme 11, 12 zusammen. Das Zahnrad 15 ist an der Rolle 14 abgewandten Ende des Arms 11 in Kontakt mit dem Zahnkranz 15 der Zahnradscheibe 10.

Nicht dargestellt ist der Fall, in dem statt V-förmiger Schubarm- oder Scheren systeme, W-förmige eingesetzt werden. In einem derartigen Fall sind 4 Arme an ihren Enden in Reihe miteinander verbunden. Das eine Ende der Anordnung ist mit der Reaktionsscheibe verbunden; das andere Ende über ein Zahnrad mit dem Zahnkranz der Zahnradscheibe. Die 3 Verbindungspunkte dazwischen sind drehbar mit Rollen verbunden und stützen sich entweder auf der Innenkontur des Exzenterrades oder auf einer ebenen Kontur parallel des Zahnkranzes ab.

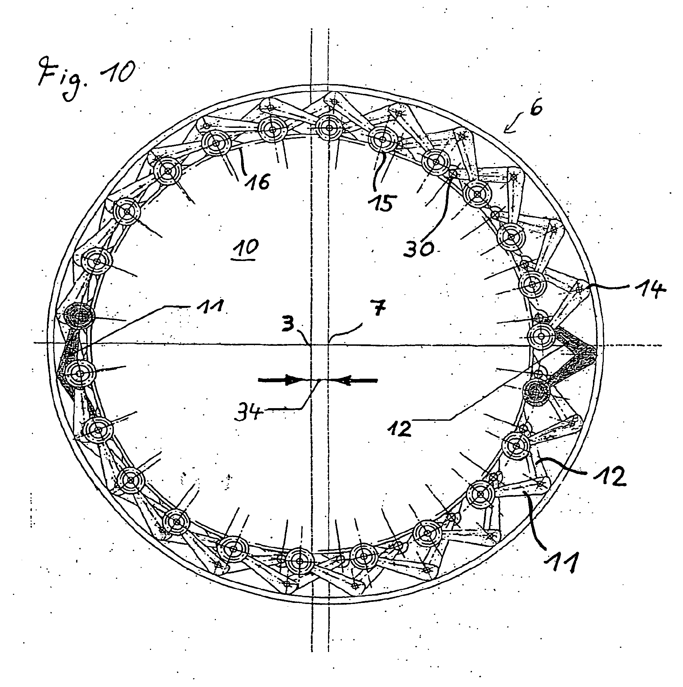

In Figur 10 ist eine Position des Schubarm- oder Scherensystems dargestellt, bei dem eine Vielzahl Arme 11, 12 vorhanden ist. Für eine laufruhige Bewegung sollten mindestens 8 Paarungen aus Armen 11, 12 vorhanden sein. Wie in Figur 5 laufen die Eingangswelle 1 und das Exzenterrad 6 nicht koaxial, sondern mit einer Exzentrizität 34. Ganz links ist eine Paarung aus Armen 11, 12 (grau dargestellt) maximal komprimiert, ganz rechts ist eine Paarung aus Armen 11, 12 (grau dargestellt) maximal aufgerichtet. Die Arme 11, 12 und Zahnräder 15 besitzen in diesem Fall unterschiedliche Geschwindigkeiten.

Das Zahnrad 15 des am schnellsten bewegten Armes 11 sperrt, wodurch dieses Zahnrad 15 über den Zahnkranz 16 und die Zahnradscheibe 10 die Ausgangswelle 10 in Rotation versetzt. Die anderen langsameren Zahnräder 15 drehen sich im Freilauf ohne Kraftübertragung. Sobald ein anderer Arm 11 schneller bewegt wird, übernimmt dessen Zahnrad 15 die Kraftübertragung. Durch die stufenlose Verdrehung des Exzenterrades 6 wird erreicht, dass die Arme 11 unterschiedlich mehr oder minder schnell bewegen werden und somit mit erhöhter Exzentrizität 34 des Exzenterrades 6 die Rotationsgeschwindigkeit der Ausgangswelle 9 zunimmt.

Bei einer Rotation des Exzenterrades 6 im Uhrzeigersinn sperrt das Zahnrad 15 des am schnellsten bewegten Armes 11 und sorgt somit für eine Drehung der Zahnradscheibe ebenfalls im Uhrzeigersinn. Die Zahnräder 15, welche nicht im Eingriff sind, drehen sich durch den Freilauf im Gegenuhrzeigersinn.

Beim Drehen des Exzenterrades 6 werden die Arme 11, 12 der Schubarm- oder Scherensysteme in der unteren Hälfte flach gedrückt, während die Arme 11, 12 der Schubarm- oder Scherensysteme in der oberen Hälfte durch die Federn 29 zusammengezogen werden, so dass die Rollen 14 nach außen an die Innenkontur 17 des Exzenterrades 6 gedrückt werden.

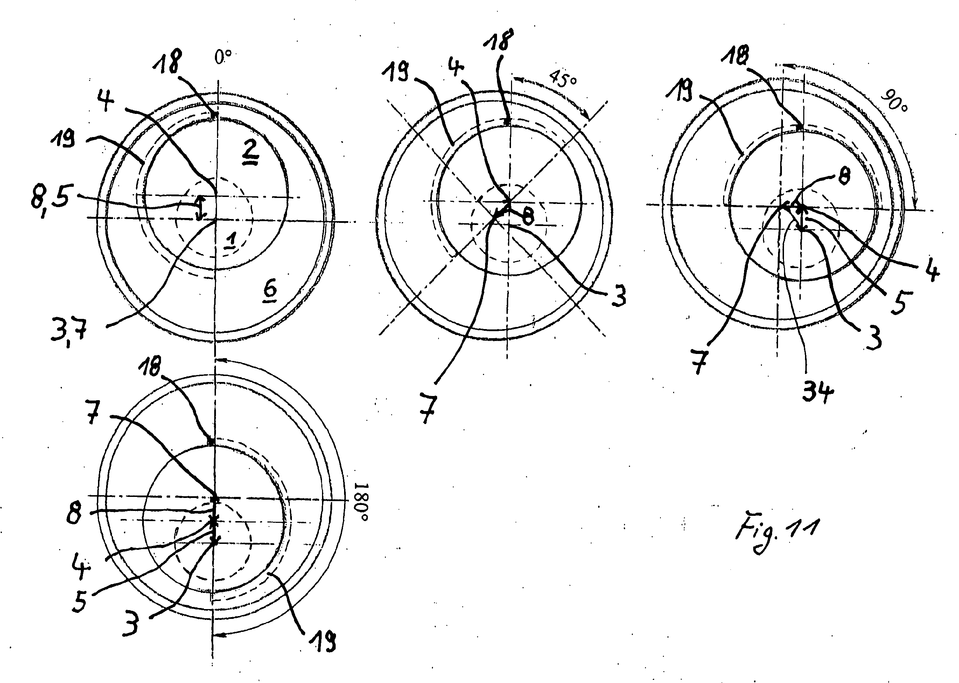

Figur 11 zeigt die Funktion der Verstelleinrichtung. Bei 0° Verdrehung laufen die Eingangswelle 1 und das Exzenterrad 6 koaxial (vgl. Figur 4). Alle Zahnräder 15 drehen sich gleich schnell und sind im Eingriff mit der Zahnradscheibe 10 (nicht in Figur 11 dargestellt). Wird das Exzenterrad 6 zur ersten Kreisscheibe 2 verdreht, so laufen die Eingangswelle 1 und das Exzenterrad 6 nicht mehr koaxial; die Mittellinien 3 und 7 der Eingangswelle 1 und des Exzenterrades 6 sind um eine Exzentrizität 34 beabstandet.

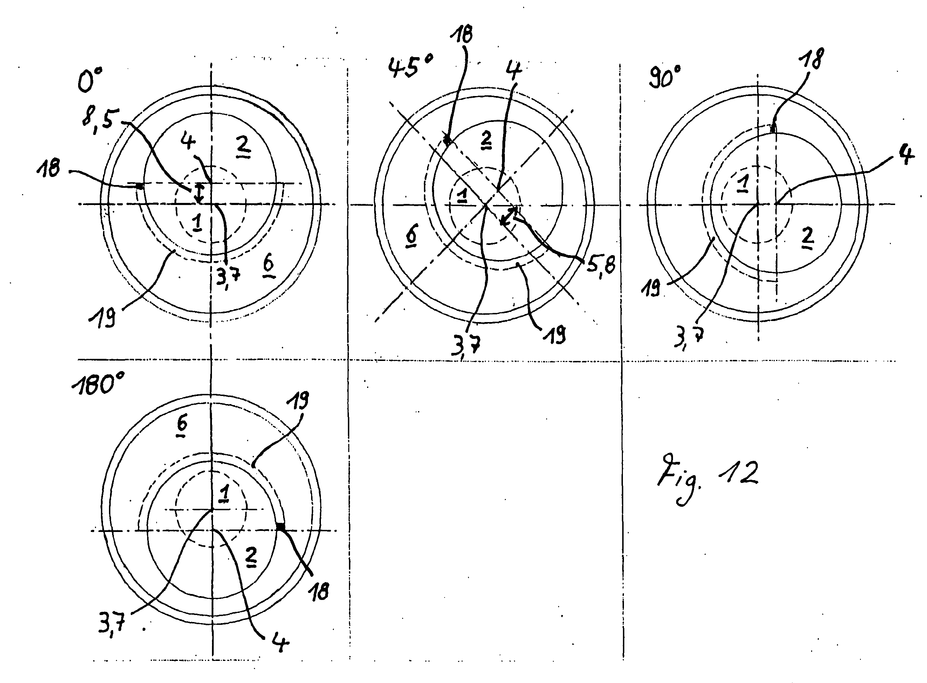

Figur 12 zeigt den Fall, in dem sich bei feststehender Verstelleinrichtung die Eingangswelle 1 im Uhrzeigersinn dreht.

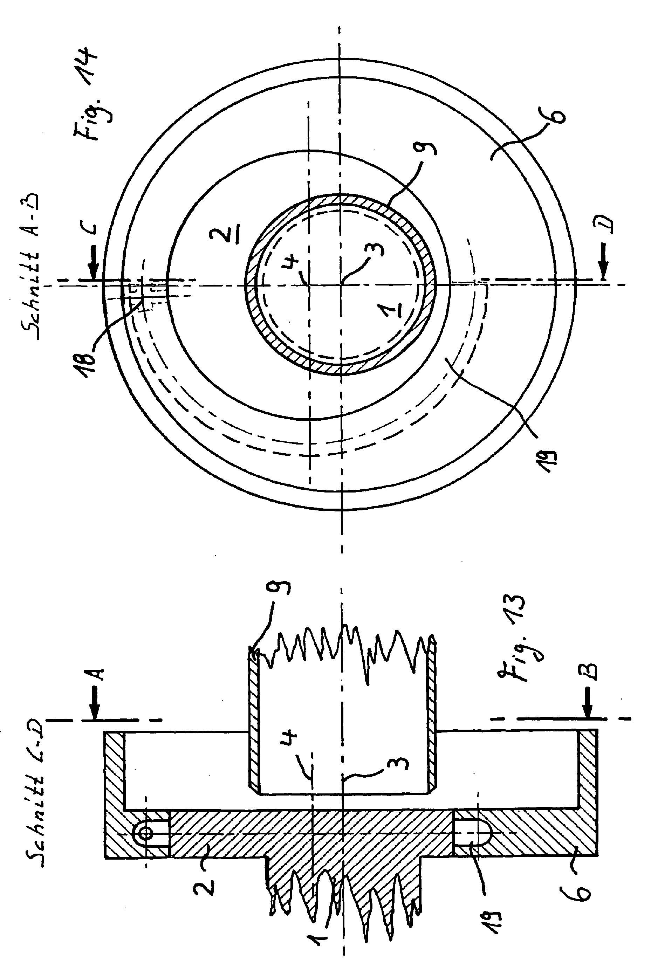

Die Figuren 13 und 14 zeigen nochmals die Verstelleinrichtung mit Eingangswelle 1, Ausgangswelle 9, erster Kreisscheibe 2, Exzenterrad 6 und Kanal 19 in vereinfachten Darstellungen.

Die Erfindung beruht darauf, dass die Ausgangswelle 9, das Exzenterrad 6 und die erste Kreisscheibe 2 so ineinander gelagert sind, dass beim gegeneinander Verdrehen des Exzenterrades 6 auf der ersten Kreisscheibe 2 eine Exzenterwirkung von Null bis zum Maximum stufenlos erzeugt wird. Das Übersetzungsverhältnis dieses Systems richtet sich nach der Exzentrizität 34 des Exzenterrades 6 zur Eingangswelle 1.

Der Primärverband besteht vorwiegend aus der Eingangswelle 1, die ein Teil der Arbeitsmaschine ist, den zwei Kreisscheiben 2, 25, der Massenausgleichsscheibe 27 mit einseitigem Zahnkranz, dem Exzenterrad 6 mit einseitigem Zahnkranz, wobei die Massenausgleichsscheibe 27 und das Exzenterrad 6 über die Zahnräder 28, welche in den Zahnkränzen laufen, kraftschlüssig verbunden sind. Die Zahnkränze verlaufen zentrisch zur Eingangswelle 1. Die Exzentrizität der Massenausgleichsscheibe 27 und des Exzenterrades 6 sind in ihrem Maß gleich. Der Massenausgleich kann beispielsweise über ein oder mehrere schüsselförmig verstellbare Hohlräder erfolgen. Die Eingangswelle 1 ist an die erste Kreisscheibe 2 geflanscht.

Der Sekundärverband bestehend vorwiegend aus den Rollen 14, den aus Armen 11, 12 gebildeten Schubarmsystemen, den Zahnrädern 15 mit Freilauf, der Reaktionsscheibe 13, der Zahnradscheibe 10 und der Ausgangswelle 9. Die Bremse 24 gehört zur Sekundärseite, ist jedoch nicht rotierend angeordnet.

Um das Getriebe aus jeder Stellung anfahren zu können, also im Extremfall bei maximaler Auslenkung des Exzenterrades 6, muss folgende Funktion gewährleistet sein:

Der ganze Primärverband dreht sich während des Startens und betätigt auch alle Freiläufe des Sekundärverbandes. Allerdings ist die Reaktionsscheibe 13 von der Bremse 24 nicht gesperrt, was ein Drehen der Reaktionsscheibe 13 zu Folge hat. Die Drehbewegung erfolgt ausschließlich über das Drehen der Reaktionsscheibe 13, während die Ausgangswelle 9 still steht. Dementsprechend wird keine Drehbewegung in den Abtrieb eingespeist.

Wird die Bremse 24 zugefahren, kann über die Arme 11, 12 Kraft übertragen werden, was eine Drehbewegung der Ausgangswelle 9 zur Folge hat.

Eine Veränderung des Übersetzungsverhältnisses wird durch das Verdrehen des im Primärverband enthaltenen Exzenterrades 6 bewirkt.

Das Getriebe ist insbesondere für den Einbau zwischen Antriebsmaschine und Abtrieb geeignet. Zum Beispiel für den Schiffsbetrieb (an Stelle von Inverter oder Verstellpropelleranlagen), Eisenbahnbetrieb (Zugmaschinen wie Dieselloks) sowie Lastkraftwagen und Personenkraftwagen sowie Fertigungsmaschinen (z.B. Maschinenbau) mit variabler Spindeldrehzahl vorgesehen (Arbeitsspindel oder Hilfsantriebe).

## Patentansprüche

1. Getriebe mit stufenlos verstellbarem Übersetzungsverhältnis,
mit einer Eingangswelle (1), welche mit einer ersten Kreisscheibe (2) form- und kraftschlüssig verbunden ist, wobei die Mittellinie (3) der Eingangswelle (1) und die Mittellinie (4) der Kreisscheibe (2) parallel mit Versatz (5) verlaufen,
einem Exzenterrad (6), welches um die erste Kreisscheibe (2) herum angeordnet ist, wobei die Mittellinie (7) des Exzenterrads (6) und die Mittellinie (4) der ersten Kreisscheibe (2) parallel mit Versatz (8) verlaufen,
mit einer Ausgangswelle (9), welche über eine Vielzahl von Armen (11, 12) und Zahnrädern (15) mit dem Exzenterrad (6) verbunden ist, wobei die Zahnräder (15) in eine Drehrichtung sperren und in der anderen Drehrichtung über einen Freilauf verfügen, wobei die erste Kreisscheibe (2) innerhalb des Exzenterrades (6) mittels einer Verstelleinrichtung verdrehbar angeordnet ist,
**dadurch gekennzeichnet, dass**
die Verstelleinrichtung hydraulisch verdrehbar ist, wobei zwischen der Kreisscheibe (2) und dem Exzenterrad (6) ein kreissegmentförmiger Kanal (19) angeordnet ist, die Kreisscheibe (2) oder das Exzenterrad (6) mit einem Trennkolben (18) verbunden ist, welcher den Kanal (19) in zwei voneinander abgetrennte Kammern (20, 21) unterteilt und Hydraulikleitungen (32, 33) zur hydraulischen Beaufschlagung der beiden Kammern (20, 21) mit unterschiedlichen Drücken vorhanden sind.

2. Getriebe nach Anspruch 1, **dadurch gekennzeichnet, dass** die Vielzahl von Armen (11, 12) ein Schubarm- oder Scherensysteme bilden, welche jeweils aus mindestens einem Paar drehbar miteinander verbundenen Armen (11, 12) bestehen, welche vorzugsweise V- oder W-förmig angeordnet sind, wobei ein Arm (11) eines Schubarm- oder Scherensystems drehbar mit einer Reaktionsscheibe (13) verbunden ist, wobei das andere Ende dieses Arms (11) sowohl mit einem anderen Arm (12), als auch mit einer drehbaren Rolle (14) verbunden ist, die Rolle (14) auf einer Innenkontur (17) des Exzenterrads (6) läuft, und der letzte Arm (12) dieses Schubarm- oder Scherensystems mit einem Zahnrad (15) verbunden ist, wobei dieses Zahnrad (15) in den Zahnkranz (16) einer Zahnradscheibe (10), welche form- und kraftschlüssig mit der Ausgangswelle (9) verbunden ist, eingreift.

3. Getriebe nach Anspruch 2, **dadurch gekennzeichnet, dass** die Reaktionsscheibe (13) über eine Bremse (24) verfügt.

4. Getriebe nach Anspruch 2 oder 3, **dadurch gekennzeichnet, dass** die Reaktionsscheibe (13) auf der Ausgangswelle (9) gelagert ist.

5. Getriebe nach einem der Ansprüche 2 bis 4, **dadurch gekennzeichnet, dass** zwischen den paarweisen Armen (11, 12) eine Feder (29), vorzugsweise Dreh- oder Schenkelfeder, zum Zusammenziehen der Arme (11, 12) und Vorspannung der Rolle (14) auf einer Innenkontur (17) des Exzenterrades (6) angeordnet ist.

6. Getriebe nach einem der Ansprüche 1 bis 5, **dadurch gekennzeichnet, dass** die mit der Eingangswelle (1) eine zweite Kreisscheibe (25) mit Versatz (35) auf der der ersten Kreisscheibe (2) um 180° gegenüberliegenden Seite angeordnet ist, um die zweite Kreisscheibe (25) außermittig eine Massenausgleichsscheibe (27) drehbar angeordnet ist, mindestens ein Zahnrad (28) mit dem Exzenterrad (6) und der Massenausgleichsscheibe (27) derart im Eingriff ist, dass die Rotation des Exzenterrades (6) zu einer Rotation der Massenausgleichsscheibe (27) in entgegengesetzter Drehrichtung führt.

7. Verfahren zum Betreiben eines Getriebes mit stufenlos verstellbarem Übersetzungsverhältnis,
mit einer Eingangswelle (1), welche mit einer ersten Kreisscheibe (2) form- und kraftschlüssig verbunden ist, wobei die Mittellinie (3) der Eingangswelle (1) und die Mittellinie (4) der Kreisscheibe (2) parallel mit Versatz (5) verlaufen,
einem Exzenterrad (6), welches um die erste Kreisscheibe (2) herum angeordnet ist, wobei die Mittellinie (7) des Exzenterrads (6) und die Mittellinie (4) der ersten Kreisscheibe (2) parallel mit Versatz (8) verlaufen,
mit einer Ausgangswelle (9), welche über eine Vielzahl von Armen (11, 12) und Zahnrädern (15) mit dem Exzenterrad (6) verbunden ist, wobei die Zahnräder (15) in eine Drehrichtung sperren und in der anderen Drehrichtung über einen Freilauf verfügen, wobei die erste Kreisscheibe (2) innerhalb des Exzenterrades (6) mittels einer hydraulischen Verstelleinrichtung verdrehbar angeordnet ist,
wobei zwischen der Kreisscheibe (2) und dem Exzenterrad (6) ein kreissegmentförmiger Kanal (19) angeordnet ist, die Kreisscheibe (2) mit einem Trennkolben (18) verbunden ist, welcher den Kanal (19) in zwei voneinander abgetrennte Kammern (20, 21) unterteilt und Hydraulikleitungen (32, 33) zur hydraulischen Beaufschlagung der beiden Kammern (20, 21) mit unterschiedlichen Drücken vorhanden sind,
**dadurch gekennzeichnet, dass**
zur Verstellung die beiden Kammern (20, 21) mit unterschiedlichen Drücken beaufschlagt werden und zum Halten der Verstellung die beiden Kammern (20, 21) mit gleichem Druck beaufschlagt werden.

8. Verfahren zum Betreiben eines Getriebes nach Anspruch 7,
mit einer Vielzahl von Armen (11, 12), die ein Schubarm- oder Scherensysteme bilden, welche jeweils aus mindestens einem Paar drehbar miteinander verbundenen Armen (11, 12) bestehen, welche vorzugsweise V- oder W-förmig angeordnet sind, wobei ein Arm (11) eines Schubarm- oder Scherensystems drehbar mit einer Reaktionsscheibe (13) verbunden ist, wobei das andere Ende dieses Arms (11) sowohl mit einem anderen Arm (12), als auch mit einer drehbaren Rolle (14) verbunden ist, die Rolle (14) auf einer Innenkontur (17) des Exzenterrads (6) läuft, und der letzte Arm (12) dieses Schubarm- oder Scherensystems mit einem Zahnrad (15) verbunden ist, wobei dieses Zahnrad (15) in den Zahnkranz (16) einer Zahnradscheibe (10), welche form- und kraftschlüssig mit der Ausgangswelle (9) verbunden ist, eingreift,
wobei die Reaktionsscheibe (13) über eine Bremse (24) verfügt.
**dadurch gekennzeichnet, dass**
beim Anfahren der Eingangswelle (1) die Bremse (24) geöffnet ist und zur Kraftübertragung auf die Ausgangswelle die Bremse (24) geschlossen wird.

## Claims

1. A gearbox with continuously variable transmission ratio,
comprising an input shaft (1) which is positively and frictionally engaged with a first circular disc (2), with the centre line (3) of the input shaft (1) and the centre line (4) of the said circular disc (2) being parallel and arranged at an offset (5),
further comprising an eccentric wheel (6) which is arranged around the said first circular disc (2), with the centre line (7) of the eccentric wheel (6) and the centre line (4) of the first circular disc (2) being parallel and arranged at an offset (9),
further comprising an output shaft (9) being connected with the said eccentric wheel (6) by means of a plurality of arms (11, 12) and gears (15), with such gears (15) being arranged to lock in one direction of rotation and possessing a freewheeling function in the other direction of rotation, with the said first circular disc (2) being arranged for rotary movement within the eccentric wheel (6) by means of an adjustment mechanism,
**characterised in that**
the said adjustment mechanism is hydraulically rotatable, with a circular segment shaped channel (19) being arranged between the circular disc (2) and the eccentric wheel (6), with further the circular disc (2) or the eccentric wheel (6) being connected with a separating piston (18) which divides the channel (19) into two mutually separate chambers (20, 21), and with hydraulic supply lines (32, 33) being provided for admitting different hydraulic pressures to the two chambers (21, 21).

2. A gearbox in accordance with Claim 1, **characterised in that** the plurality of arms (11, 12) constitute a push arm or shear-jointed system which is composed of at least one pair of mutually rotatably connected arms (11, 12) which are disposed in a preferably V-shaped or W-shaped arrangement, with one arm (11) of a push arm or shear-jointed system being rotatably connected with a reaction disc (13) and the other arm (12) being connected with both another arm (12) and a rotatable roller (14), such roller (14) moving on the internal contour (17) of the eccentric wheel (6), and the last arm (12) of this push arm or shear-jointed system being connected with a gear (15), such gear (15) engaging a gear rim (16) of a toothed disc (10) which latter is in positive and fictional engagement with the output shaft (9).

3. A gearbox in accordance with Claim 2, **characterised in that** the reaction disc (13) is equipped with a brake (24).

4. A gearbox in accordance with any Claims 2 or 3, **characterised in that** the reaction disc (13) is connected with the output shaft (9).

5. A gearbox in accordance with any of Claims 2 to 4, **characterised in that** between the pairs of arms (11, 12) provision is made of a spring (29), preferably a torsion or leg spring, for contracting the arms (11, 12) and biasing the roller (14) toward an internal contour (17) of the eccentric wheel (6).

6. A gearbox in accordance with any of Claim 1 to 5, **characterised in that**, together with the input shaft (1) on the side 180 degrees opposite the first circular disc (2) a second circular disc (25) is arranged at an offset (35), that around the second circular disc (25) a rotatable mass balancing disc (27) is eccentrically arranged, that at least one gear (28) is in engagement with the eccentric wheel (6) and the mass balancing disc (27) in such a way that any rotation of the eccentric wheel (6) causes a rotation in the opposite direction of the mass balancing disc (27).

7. A process for operating a gearbox with continuously variable transmission ratio, comprising an input shaft (1) which is frictionally and positively engaged with a first circular disc (2), with the centre line (3) of the input shaft (1) and the centre line (4) of the said circular disc (2) being parallel and arranged at an offset (5),
comprising further an eccentric wheel (6) which is arranged around the said first circular disc (2), with the centre line (7) of the eccentric wheel (6) and the centre line (4) of the first circular disc (2) being parallel and arranged at an offset (9), comprising further an output shaft (9) being connected with the said eccentric wheel (6) by means of a plurality of arms (11, 12) and gears (15), with such gears (15) being arranged to lock in one direction of rotation and possessing a freewheeling function in the other direction of rotation, with the said first circular disc (2) being arranged for rotary movement within the eccentric wheel (6) by means of an adjustment mechanism,
with a circular segment shaped channel (19) being arranged between the circular disc (2) and the eccentric wheel (6), with further the circular disc (2) being connected with a separating piston (18) which divides the channel (19) into into two mutually separate chambers (20, 21), and with hydraulic lines (32/33) being provided for admitting different hydraulic pressures to the two chambers (21, 21), **characterised in that** for the purpose of adjustment different pressures are admitted to the two chambers (20, 21) and for the purpose of holding a certain adjustment position an equal amount of pressure is admitted to the two chambers (20, 21).

8. A process for operating a gearbox in accordance with Claim 7, having a plurality of arms (11, 12) which constitute a push arm or shear-jointed system which is composed of at least one pair of mutually rotatably connected arms (11, 12) which are disposed in a preferably V-shaped or in a W-shaped arrangement, with one arm (11) of a push arm or shear-jointed system being rotatably connected with a reaction disc (13) and the other arm (12) being connected with both another arm (12) and a rotatable roller (14), such roller (14) moving on the internal contour (17) of the eccentric wheel (6), and the last arm (12) of this push arm or shear-jointed system being connected with a gear (15), such gear (15) engaging a gear rim (16) of a toothed disc (10) which latter is in positive and fictional engagement with the output shaft (9), with the reaction disc (13) comprising a brake (24), **characterised in that** for the purpose of starting up the input shaft (1) the brake (24) is in released condition and for the purpose of power transmission to the output shaft the said brake (24) is applied.

## Revendications

1. Boîte de vitesses avec rapport de changement de vitesses variable en continu,
comprenant un arbre d'entrée (1) qui est relié à un premier disque circulaire (2) par conjugaison de forme et adhérence, dans laquelle la ligne médiane (3) de l'arbre d'entrée (1) et la ligne médiane (4) du disque circulaire (2) s'étendent parallèlement avec un chevauchement (5),
une roue excentrique (6) qui est disposée autour du premier disque circulaire (2), dans laquelle la ligne médiane (7) de la roue excentrique (6) et la ligne médiane (4) du premier disque circulaire (2) s'étendent parallèlement avec un chevauchement (8), comprenant un arbre de sortie (9) qui est relié par le biais d'une pluralité de bras (11, 12) et de roues dentées (15) à la roue excentrique (6), dans laquelle les roues dentées (15) se bloquent dans un sens de rotation et disposent d'une course libre dans l'autre sens de rotation, dans laquelle le premier disque circulaire (2) est disposé de manière à pouvoir tourner au sein de la roue excentrique (6) au moyen d'un dispositif de réglage,
**caractérisée en ce que**
le dispositif de réglage peut tourner par voie hydraulique, dans laquelle un canal en forme de segment de cercle (19) est disposé entre le disque circulaire (2) et la roue excentrique (6), le disque circulaire (2) ou la roue excentrique (6) est relié(e) à un piston de séparation (18) qui subdivise le canal (19) en deux chambres (20, 21) séparées l'une de l'autre et des conduites hydrauliques (32, 33) sont présentes pour la sollicitation hydraulique des deux chambres (20, 21) avec différentes pressions.

2. Boîte de vitesses selon la revendication 1, **caractérisée en ce que** la pluralité de bras (11, 12) forment des systèmes de bras de cisaillement ou de cisaillement qui se composent chacun d'au moins une paire de bras reliés ensemble à rotation (11, 12) qui sont de préférence disposés en forme de V ou de W, dans laquelle un bras (11) d'un système de bras de cisaillement ou de cisaillement est relié à rotation à un disque de réaction (13), dans laquelle l'autre extrémité de ce bras (11) est reliée aussi bien à un autre bras (12) qu'à un rouleau rotatif (14), le rouleau (14) s'étend sur un contour interne (17) de la roue excentrique (6) et le dernier bras (12) de ce système de bras de cisaillement ou de cisaillement est relié à une roue dentée (15), dans laquelle cette roue dentée (15) s'engrène dans la couronne dentée (16) d'un disque de roue dentée (10) qui est relié par conjugaison de forme et adhérence à l'arbre de sortie (9).

3. Boîte de vitesses selon la revendication 2, **caractérisée en ce que** le disque de réaction (13) dispose d'un frein (24).

4. Boîte de vitesses selon la revendication 2 ou 3, **caractérisée en ce que** le disque de réaction (13) est logé sur l'arbre de sortie (9).

5. Boîte de vitesses selon l'une quelconque des revendications 2 à 4, **caractérisée en ce qu'**un ressort (29), de préférence un ressort de torsion ou à branches, est disposé entre les bras par paire (11, 12) pour la contraction des bras (11, 12) et la précontrainte du rouleau (14) sur un contour interne (17) de la roue excentrique (6).

6. Boîte de vitesses selon l'une quelconque des revendications 1 à 5, **caractérisée en ce qu'**un second disque circulaire (25) est disposé avec l'arbre d'entrée (1) avec un chevauchement (35) sur le côté opposé de 180° au premier disque circulaire (2), un disque de compensation de masse (27) est disposé à rotation de manière excentrée autour du second disque circulaire (25), au moins une roue dentée (28) est en engagement avec la roue excentrique (6) et le disque de compensation de masse (27) de telle sorte que la rotation de la roue excentrique (6) conduit à une rotation du disque de compensation de masse (27) dans le sens de rotation opposé.

7. Procédé d'exploitation d'une boîte de vitesses avec rapport de changement de vitesses variable en continu, comprenant un arbre d'entrée (1) qui est relié à un premier disque circulaire (2) par conjugaison de forme et adhérence, dans lequel la ligne médiane (3) de l'arbre d'entrée (1) et la ligne médiane (4) du disque circulaire (2) s'étendent parallèlement avec un chevauchement (5),
une roue excentrique (6) qui est disposée autour du premier disque circulaire (2), dans lequel la ligne médiane (7) de la roue excentrique (6) et la ligne médiane (4) du premier disque circulaire (2) s'étendent parallèlement avec un chevauchement (8), comprenant un arbre de sortie (9) qui est relié par le biais d'une pluralité de bras (11, 12) et de roues dentées (15) à la roue excentrique (6), dans lequel les roues dentées (15) se bloquent dans un sens de rotation et disposent d'une course libre dans l'autre sens de rotation, dans lequel le premier disque circulaire (2) est disposé de manière à pouvoir tourner au sein de la roue excentrique (6) au moyen d'un dispositif de réglage hydraulique,
dans lequel un canal en forme de segment de cercle (19) est disposé entre le disque circulaire (2) et la roue excentrique (6), le disque circulaire (2) est relié à un piston de séparation (18) qui subdivise le canal (19) en deux chambres (20, 21) séparées l'une de l'autre et des conduites hydrauliques (32, 33) sont présentes pour la sollicitation hydraulique des deux chambres (20, 21) avec différentes pressions,
**caractérisé en ce que**
les deux chambres (20, 21) sont sollicitées avec différentes pressions pour le réglage et les deux chambres (20, 21) sont sollicitées avec une même pression pour maintenir le réglage.

8. Procédé d'exploitation d'une boîte de vitesses selon la revendication 7,
comprenant une pluralité de bras (11, 12) qui forment des systèmes de bras de cisaillement ou de cisaillement qui se composent chacun d'au moins une paire de bras reliés ensemble à rotation (11, 12) qui sont de préférence disposés en forme de V ou de W, dans lequel un bras (11) d'un système de bras de cisaillement ou de cisaillement est relié à rotation à un disque de réaction (13), dans lequel l'autre extrémité de ce bras (11) est reliée aussi bien à un autre bras (12) qu'à un rouleau rotatif (14), le rouleau (14) s'étend sur un contour interne (17) de la roue excentrique (6) et le dernier bras (12) de ce système de bras de cisaillement ou de cisaillement est relié à une roue dentée (15), dans lequel cette roue dentée (15) s'engrène dans la couronne dentée (16) d'un disque de roue dentée (10) qui est relié par conjugaison de forme et adhérence à l'arbre de sortie (9),
dans lequel le disque de réaction (13) dispose d'un frein (24),
**caractérisé en ce que**
le frein (24) est ouvert lors du démarrage de l'arbre d'entrée (1) et le frein (24) est fermé pour la transmission de force à l'arbre de sortie.
